(19) **Europäisches Patentamt / European Patent Office / Office européen des brevets**

(11) **EP 4 715 618 A1**

(12) **EUROPEAN PATENT APPLICATION**
published in accordance with Art. 153(4) EPC

(43) Date of publication:
**25.03.2026 Bulletin 2026/13**

(21) Application number: **24822488.3**

(22) Date of filing: **20.05.2024**

(51) International Patent Classification (IPC):
***G06F 16/21*** (2019.01)

(52) Cooperative Patent Classification (CPC):
**G06F 9/46; G06F 9/48; G06F 9/52; G06F 16/21;
G06F 16/23; G06F 16/242; G06F 16/2455;
G06F 16/27; H04L 67/10; H04L 67/1097**

(86) International application number:
**PCT/CN2024/094267**

(87) International publication number:
**WO 2024/255536 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.06.2023 CN 202310693898
30.04.2024 CN 202410543821**

(71) Applicant: **Huawei Cloud Computing
Technologies Co., Ltd.
Guiyang, Guizhou, 550025 (CN)**

(72) Inventors:
• **MA, Wenlong**
**Guiyang, Guizhou 550025 (CN)**
• **ZHANG, Wenliang**
**Guiyang, Guizhou 550025 (CN)**
• **PENG, Lixun**
**Guiyang, Guizhou 550025 (CN)**

(74) Representative: **MERH-IP Matias Erny Reichl
Hoffmann
Patentanwälte PartG mbB
Paul-Heyse-Straße 29
80336 München (DE)**

(54) **TRANSACTION PROCESSING METHOD AND CLOUD-NATIVE DATABASE SYSTEM**

(57) Embodiments of this application disclose a transaction processing method and a cloud-native database system, and belong to the field of database technologies. The method includes: A first database computing node responds to a transaction request of a user and starts to process a target transaction; the first database computing node stores state information of the target transaction into a database state node in a process of processing the target transaction; in the process in which the first database computing node processes the target transaction, the first database computing node suspends processing the target transaction; and a second database computing node obtains the state information of the target transaction from the database state node, and continues to process the target transaction based on the state information of the target transaction. In this application, after database computing node switchover is performed, resumable processing can be performed on a transaction, so that time resource overheads caused by the database computing node switchover are reduced, and the database computing node switchover is imperceptible to the user.

A first database computing node responds to a transaction request of a user and starts to process a target transaction, where the target transaction is used for performing a read operation and/or a write operation on data in a database storage node — 501

The first database computing node stores state information of the target transaction into a database state node in a process of processing the target transaction — 502

In the process in which the first database computing node processes the target transaction, the first database computing node suspends processing the target transaction — 503

A second database computing node obtains the state information of the target transaction from the database state node, and continues to process the target transaction based on the state information of the target transaction — 504

FIG. 5

## Description

This application claims priorities to Chinese Patent Application No. 202310693898.4, filed on June 12, 2023 and entitled "DATABASE SYSTEM AND TRANSACTION PROCESSING METHOD", and to Chinese Patent Application No. 202410543821.3, filed on April 30, 2024 and entitled "TRANSACTION PROCESSING METHOD AND CLOUD-NATIVE DATABASE SYSTEM", both of which are incorporated herein by reference in their entireties.

## TECHNICAL FIELD

This application relates to the field of database technologies, and in particular, to a transaction processing method and a cloud-native database system.

## BACKGROUND

When a cloud-native database system is used, a transaction may be switched over from one database computing node to another database computing node for execution in numerous cases. For example, during scale-out, a new database computing node is directly added, and then transactions that are currently not completely processed in some congested database computing nodes may be switched over to the new computing node for execution. In addition, if cases such as breakdown and network disconnection occur, a faulty database computing node in the cloud-native database system is brought offline, and a transaction that is currently not completely processed in the offline database computing node is also switched over to another database computing node for execution. It can be learned that, when the cloud-native database system is used, database computing node switchover may be performed in a planned scenario or an unplanned scenario. Accordingly, how to make the database computing node switchover imperceptible to a user and how to make time resource overheads caused by the database computing node switchover not affect user experience are a major challenge currently faced.

## SUMMARY

This application provides a transaction processing method and a cloud-native database system, so that time resource overheads caused by database computing node switchover do not affect user experience, and the database computing node switchover is imperceptible to a user. The technical solutions are as follows:

According to a first aspect, a transaction processing method is provided. The method is applied to a cloud-native database system, the cloud-native database system includes a first database computing node, a second database computing node, a database state node, and a database storage node, the first database computing node and the second database computing node are configured to process a transaction requested by a user, the database state node is configured to store state information of the transaction, and the database storage node is configured to store data of a database; and the method includes: The first database computing node responds to a transaction request of the user and starts to process the target transaction, where the target transaction is used for performing a read operation and/or a write operation on the data in the database storage node; the first database computing node stores state information of the target transaction into the database state node in a process of processing the target transaction; in the process in which the first database computing node processes the target transaction, the first database computing node suspends processing the target transaction; and the second database computing node obtains the state information of the target transaction from the database state node, and continues to process the target transaction based on the state information of the target transaction.

The state information of the target transaction may include a table locked state of the write operation that is being performed, a log of the target transaction, a query plan tree and an intermediate result of a read operation statement in the target transaction, and the like.

The table locked state of the write operation means that a data table being used for the write operation is in a locked state, and another transaction cannot be used for performing an operation on the data table being used for the write operation. The log of the target transaction records an operating state of the write operation in the target transaction. The query plan tree of the read operation statement is used for guiding an execution step of the statement, and the intermediate result is a result (excluding a final execution result) obtained through some execution steps of the query plan tree of the statement.

The state information of the target transaction is stored into the database state node, and the second database computing node obtains the state information of the target transaction from the database state node, so that the second database computing node can continue to process the target transaction based on a state obtained before the target transaction is suspended, thereby implementing resumable processing at a transaction granularity. In this way, in comparison with rollback or redo, time resource overheads caused by database computing node switchover can be reduced, and user experience can be improved.

Optionally, the target transaction includes at least one structured query language (structured query language, SQL) statement, and the state information of the target transaction is used for recording an execution state of an SQL statement that is being executed in the target transaction before the target transaction is suspended; and that the second database computing node continues to process the target transaction based on the state information of the target transaction includes: The second database computing node continues, based on the execution state of the SQL statement that is being executed in the target transaction before the target transaction is suspended, to execute the SQL statement that is being executed in the target transaction.

An execution state of an SQL statement in the target transaction is state information related to the SQL statement in the state information of the target transaction. If an SQL statement is a write operation statement, an execution state of the SQL statement may include an operating state (recorded in the log of the target transaction) of a write operation corresponding to the SQL statement, a table locked state of the write operation corresponding to the SQL statement, and the like. If an SQL statement is a read operation statement, an execution state of the SQL statement may include a query plan tree and an intermediate result that correspond to the SQL statement, and the like.

The execution state of the SQL statement that is being executed in the target transaction before the target transaction is suspended is stored into the database state node, and the second database computing node continues to execute the SQL statement based on the execution state of the SQL statement, thereby actually implementing resumable processing at a statement granularity.

Optionally, that the first database computing node stores the state information of the target transaction into the database state node in the process of processing the target transaction includes: The first database computing node stores the log of the target transaction into the database state node; and that the second database computing node continues to process the target transaction based on the state information of the target transaction includes: The second database computing node continues, based on the log of the target transaction in the database state node, to perform the write operation that is being performed in the target transaction before the target transaction is suspended.

It should be noted that, in the process in which the first database computing node executes the target transaction, an operating state of each write operation is recorded in the log of the target transaction, and is stored into the database state node. In this way, the second database computing node may obtain, based on the log of the target transaction, a location at which the write operation that is being performed in the target transaction before the target transaction is suspended is performed, an operating state of the write operation that has been performed, and the like, so as to continue to perform the write operation that is being performed in the target transaction before the target transaction is suspended.

Therefore, even if the first database computing node is suddenly faulty in a process of performing a write operation, an operating state of the write operation has been recorded in the log of the target transaction, and has been stored into the database state node. Therefore, for a case in which the write operation is being performed before the target transaction is suspended, regardless of node switchover in an unplanned scenario or node switchover in an unplanned scenario, in this embodiment of this application, the resumable processing can be performed at the transaction granularity or even the statement granularity.

Optionally, that the first database computing node stores the state information of the target transaction into the database state node in the process of processing the target transaction further includes: The first database computing node stores, into the state node, the table locked state of the write operation that is being performed in the target transaction before the target transaction is suspended; and that the second database computing node continues to process the target transaction based on the state information of the target transaction includes: The second database computing node continues, based on the log of the target transaction in the database state node and the table locked state of the write operation that is being performed in the target transaction before the target transaction is suspended, to perform the write operation that is being performed in the target transaction before the target transaction is suspended.

It should be noted that a table locked state corresponding to a write operation is actually generated before the write operation is performed, and the first database computing node actually stores, into the database state node, a table locked state corresponding to a write operation immediately after the table locked state corresponding to the write operation is generated. Therefore, even if the first database computing node is suddenly faulty in a process of performing a write operation, a table locked state of the write operation has been stored into the database state node.

Optionally, that the first database computing node stores the state information of the target transaction into the database state node in the process of processing the target transaction includes: The first database computing node stores, into the database state node, the query execution plan tree and the intermediate result of the SQL statement that corresponds to the read operation and that is being executed in the target transaction before the target transaction is suspended; and that the second database computing node continues to process the target transaction based on the state information of the target transaction includes: The second database computing node continues, based on the query execution plan tree and the intermediate result, in the database state node, of the SQL statement that corresponds to the read operation and that is being executed in the target transaction before the target transaction is suspended, to perform the read operation that is being performed in the target transaction before the target transaction is suspended.

It should be noted that the stored intermediate result is a latest intermediate result before the target transaction is suspended.

Before switchover, the first database computing node needs to store, into the database state node, the latest intermediate result and the SQL statement that corresponds to the read operation and that is being executed in the target transaction before the target transaction is suspended. Therefore, the first database needs to learn of a switchover plan. It can be learned that the foregoing method is applicable to the database computing node switchover in the planned scenario. In other words, for a case in which the read operation is being performed before the target transaction is suspended, after database computing node switchover is performed in the planned scenario, in this method, the resumable processing can also be performed at the transaction granularity or even the statement granularity.

Optionally, that the first database computing node stores the state information of the target transaction into the database state node in the process of processing the target transaction includes: The first database computing node stores, into the database state node in the process of processing the target transaction, an SQL statement that corresponds to the read operation and that is currently being executed in the target transaction; and that the second database computing node continues to process the target transaction based on the state information of the target transaction includes: The second database computing node re-executes the SQL statement that corresponds to the read operation and that is being executed in the target transaction before the target transaction is suspended.

When database computing node switchover is performed in the unplanned scenario, the first database computing node does not know when database computing node switchover is performed, and therefore does not know when the latest intermediate result should be stored. If resumable processing of the read operation can be performed as that in the planned scenario, the intermediate result needs to be stored periodically. However, this causes large resource overheads. Therefore, in this application, the first database computing node may store, into the database state node, one SQL statement that is being executed at each moment in the process of processing the target transaction. After database computing node switchover is performed in the unplanned scenario, the second database computing node can obtain the SQL statement that is being executed before the target transaction is suspended, to re-execute the statement.

Optionally, that the first database computing node stores the state information of the target transaction into the database state node in the process of processing the target transaction further includes: The first database computing node stores, into the database state node in the process of processing the target transaction, an execution result of the SQL statement that corresponds to the read operation and that has been executed in the target transaction; and that the second database computing node continues to process the target transaction based on the state information of the target transaction further includes: After re-executing the SQL statement that corresponds to the read operation and that is currently being executed in the target transaction, the second database computing node continues to process the target transaction based on the execution result, in the database state node, of the SQL statement that corresponds to the read operation and that has been executed in the target transaction.

In this way, if an execution result of an SQL statement corresponding to a previous read operation needs to be used when the target transaction is subsequently processed, the execution result may be directly used. This helps implement the resumable processing at the transaction granularity.

Optionally, a persistent memory is used for the database state node to store the state information of the transaction.

The persistent memory is used for the database state node to store the state information of the transaction. After the log of the transaction is written into the database state node from the first database computing node, the transaction can be committed without waiting for the log of the transaction to be flushed to the database storage node. In this way, an increase in response time of the target transaction to a client can be avoided, and performance deterioration of the cloud-native database system caused because the log of the target transaction needs to pass through network links at two layers to complete commitment can be avoided.

Optionally, the method further includes: The first database computing node pushes down, to the database storage node for execution, a target operator of the SQL statement that is being executed in the target transaction before the target transaction is suspended, where the target operator is a part of operators included in the query execution plan tree of the SQL statement that is being executed; the database storage node stores an execution result of the target operator; and after the first database computing node suspends processing the target transaction, that the second database computing node obtains the state information of the target transaction from the database state node, and continues to process the target transaction based on the state information of the target transaction includes: After the first database computing node suspends processing the target transaction, the second database computing node obtains the state information of the target transaction from the database state node, and obtains the execution result of the target operator from the database storage node; and the second database computing node continues, based on the state information of the target transaction and the execution result of the target operator, to execute the SQL statement that is being executed in the target transaction before the target transaction is suspended.

The part of operators is pushed down to the database storage node for execution, and the database storage node saves the execution result, so that an amount of data transmitted between the database storage node and the first database computing node can be reduced, and a speed of processing the target transaction by the entire cloud-native database system can be accelerated.

Optionally, the state information of the target transaction further includes a session state of the target transaction. In other words, in the process of processing the target transaction, the first database computing node may further store the session state of the target transaction into the database state node.

In this way, an example in which an implementation environment includes a scheduling node is used. When the target transaction needs to be switched over to another database computing node for execution, the scheduling node may obtain the session state of the target transaction from the database state node, and the scheduling node may learn of information such as an identifier of a client that initiates a transaction request of the target transaction and an identifier of the target transaction. In this way, the scheduling node may switch over the target transaction from the first database computing node to the another database computing node, and does not switch over an incorrect transaction or switch over the target transaction to an inappropriate computing node, and a connection between the client and the database computing node to which the target transaction is switched over can be successfully established without re-sending a transaction request by the client, so that node switchover is imperceptible to the user.

Optionally, the method includes: The first database computing node stores the state information of the target transaction into the database state node based on a remote direct memory access (remote direct memory access, RDMA) technology or a compute express link (compute express link, CXL) technology; and/or the second database computing node obtains the state information of the target transaction from the database state node based on the RDMA technology or the CXL technology.

The RDMA technology allows a user program to bypass an operating system kernel to directly interact with a network adapter and communicate with a network. The CXL technology also features a high bandwidth and a low latency, and is often applied to the fields of high-performance computing, cloud computing, and the like. The state information is transferred based on the RDMA technology or the CXL technology, so that a network bandwidth in a transfer process of the state information can be improved, and a latency in the transfer process can be reduced, thereby improving performance of the cloud-native database system.

Optionally, the first database computing node suspends processing the target transaction when cross-node scale-out or cross-node scale-in needs to be performed, or a fault occurs.

Database computing node switchover caused by the cross-node scale-out or the cross-node scale-in is database computing node switchover in the planned scenario, and database computing node switchover caused by the fault is database computing node switchover in the unplanned scenario.

According to a second aspect, a cloud-native database system is provided. The cloud-native database system includes a first database computing node, a second database computing node, a database state node, and a database storage node, the first database computing node and the second database computing node are configured to process a transaction requested by a user, the database state node is configured to store state information of the transaction, and the database storage node is configured to store data of a database. The cloud-native database system has a function of implementing behavior of the transaction processing method in the first aspect.

According to a third aspect, a computing device cluster is provided. The computing device cluster includes at least one computing device, each computing device includes a processor and a storage, and the processor of the at least one computing device is configured to execute instructions stored in the storage of the at least one computing device, to cause the computing device cluster to perform the transaction processing method according to the first aspect.

According to a fourth aspect, a computer-readable storage medium is provided. The storage medium includes computer program instructions, and when the computer program instructions are executed by a computing device cluster, the computing device cluster performs the transaction processing method according to the first aspect.

According to a fifth aspect, a computer program product including instructions is provided. When the instructions are run by a computing device cluster, the computing device cluster is caused to perform steps of the transaction processing method according to the first aspect. In other words, a computer program is provided. When the computer program is run on the computing device cluster, a computer is caused to perform the transaction processing method according to the first aspect.

Technical effects achieved in the second aspect, the third aspect, the fourth aspect, and the fifth aspect are similar to technical effects achieved by the corresponding technical means in the first aspect. Details are not described herein again.

## BRIEF DESCRIPTION OF DRAWINGS

FIG. 1 is a diagram of a structure of a conventional database system according to an embodiment of this application;
FIG. 2 is a diagram of a structure of a database system in which storage-compute decoupling is performed according to an embodiment of this application;
FIG. 3 is a diagram of an implementation environment according to an embodiment of this application;
FIG. 4 is a diagram of a structure of a cloud-native database system according to an embodiment of this application;
FIG. 5 is a flowchart of a transaction processing method according to an embodiment of this application;
FIG. 6 is a diagram of a database computing node switchover process according to an embodiment of this application;
FIG. 7 is a diagram of another database computing node switchover process according to an embodiment of this application;
FIG. 8 is a diagram of a process of executing a plurality of operators when a target transaction is processed according to an embodiment of this application;
FIG. 9 is a diagram of another database computing node switchover process according to an embodiment of this application;
FIG. 10 is a diagram of another database computing node switchover process according to an embodiment of this application;
FIG. 11 is a diagram of a structure of a computer device according to an embodiment of this application;
FIG. 12 is a diagram of a structure of a computing device cluster according to an embodiment of this application; and
FIG. 13 is a diagram of a connection mode between two computer devices according to an embodiment of this application.

## DESCRIPTION OF EMBODIMENTS

To make objectives, technical solutions, and advantages of embodiments of this application clearer, the following further describes implementations of this application in detail with reference to accompanying drawings.

First, an application scenario and an implementation environment in embodiments of this application are described.

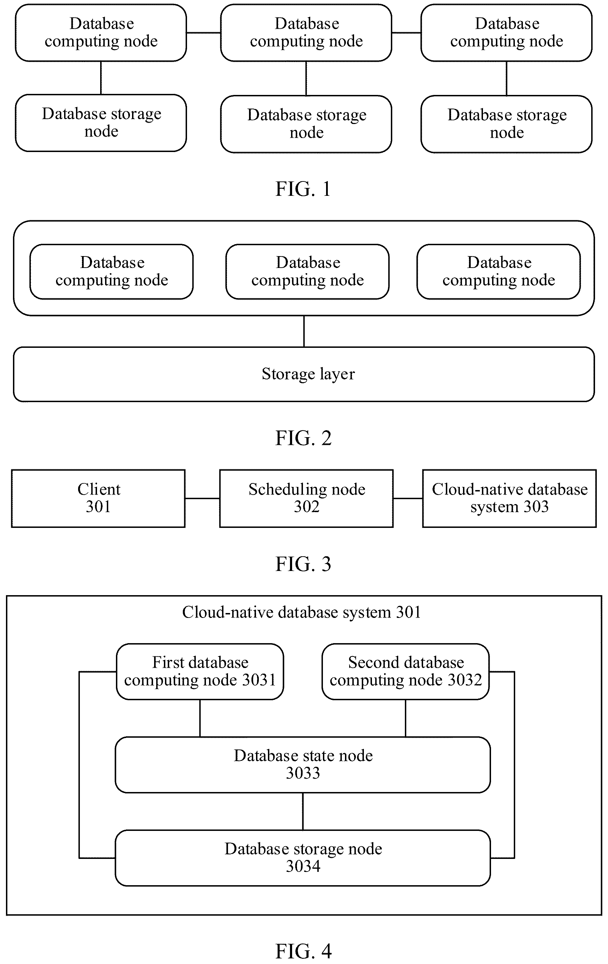

In a conventional database system architecture, a tight coupling design manner is usually used, and computing and storage are not decoupled. As shown in FIG. 1, all database computing nodes have respective corresponding database storage nodes, and these database storage nodes are not shared. Consequently, a scale-out process of a conventional database system is extremely long, and a scale-in process after a service peak is extremely difficult. This usually causes a great waste of resources, and is one of significant disadvantages of the conventional database system architecture. Different from the conventional database architecture, in a database system architecture in which storage-compute decoupling is performed, computing and storage are decoupled, distributed shared storage is used for a storage layer, and all database computing nodes at a computing layer share storage content at the storage layer. Therefore, scale-in or scale-out is easier for the database system architecture in which storage-compute decoupling is performed than for the conventional database architecture.

The database system architecture in which storage-compute decoupling is performed is usually used for a current cloud-native database system. As shown in FIG. 2, in this architecture, the cloud-native database system includes a computing layer and a storage layer. The computing layer may include a plurality of database computing nodes, and the storage layer may include a plurality of database storage nodes (not shown in the figure). All the database computing nodes at the computing layer share storage content at the storage layer. The computing layer and the storage layer may be quickly scaled out or scaled in as required.

In the cloud-native database system, the database storage node is configured to store a database, the database computing node is configured to analyze and execute an SQL statement included in a transaction, and local storage space of the database computing node may temporarily store a query execution plan tree of the SQL statement, an intermediate result of the SQL statement, an execution result of the SQL statement, and the like.

The cloud-native database system can scale in or out the computing layer by directly adding or removing a database computing node. It is assumed that scale-in needs to be performed on the computing layer. If a database computing node to be removed has a transaction being executed, the transaction being executed is suspended, and is switched over to another database computing node to continue execution. When scale-out is performed on the computing layer, a case in which a transaction is suspended and then switched over to another database computing node to continue execution may also occur. In addition, when cases such as breakdown and network disconnection suddenly occur on the cloud-native database system, a faulty database computing node is directly brought offline, and a transaction that is being processed currently by the database computing node is switched over to another database computing node for execution. In other words, when scale-out or scale-in is performed on the database computing node, or the cases such as the breakdown and the network disconnection occur on the database computing node, a case in which a transaction is switched over from one database computing node to another database computing node for processing may occur. In this application, for ease of description, switchover caused by the cross-node scale-out or the cross-node scale-in on the database computing node is referred to as switchover in a planned scenario below, and switchover caused by the unexpected breakdown, a fault, the network disconnection, and the like that occur on the database computing node is referred to as switchover in an unplanned scenario below.

In the current cloud-native database system, a write operation needs to be rolled back or redone for the database computing node to which the transaction is switched over after the transaction is suspended. Some cloud-native database systems redo a read operation. Some cloud-native database systems can perform resumable processing after database computing node switchover in the planned scenario, but can only redo the read operation after database computing node switchover in the unplanned scenario. However, as a user service volume and service complexity increase, a proportion of long transactions in transactions that need to be processed by the cloud-native database system increases. For these long transactions, rollback or redo time may be long. Consequently, a client cannot obtain a latest execution result of an SQL statement for long time. Therefore, a major challenge currently faced is how to reduce extra overheads caused by transaction rollback or redo, so as to make the node switchover imperceptible to a user and make time resource overheads caused by the node switchover not affect user experience.

Based on this, embodiments of this application provide a cloud-native database system. Based on an existing cloud-native database system in which computing and storage are decoupled, the cloud-native database system further decouples state information generated in a process of processing a transaction by a database computing node. That is, an architecture of the cloud-native database system is an architecture in which the storage, the computing, and a state are decoupled. In addition to the database computing node and a database storage node, the cloud-native database system further includes a database state node. In the cloud-native database system, after state information is generated in a process in which a first database computing node executes a transaction, the first database computing node sends the state information to the database state node, and the database state node stores the state information. In this way, when the first database computing node suspends executing the transaction, and the transaction is switched over to a second database computing node for execution, the second database computing node may obtain the state information of the transaction from the database state node, for example, a query execution plan tree and an intermediate result of an SQL statement that is being executed before the transaction is suspended, or a log of the transaction (which records a state of an operation performed on data based on the SQL statement that is being executed before the transaction is suspended). In this way, for a read operation, after database computing node switchover in a planned scenario is completed, the second database computing node may continue to execute the SQL statement that is currently being executed in the transaction, that is, perform resumable processing on the transaction or even the SQL statement that is being executed before the transaction is suspended. A write operation does not need to be rolled back or redone after database computing node switchover is completed in various scenarios, but resumable processing may be performed on the transaction or even on the SQL statement that is being executed before the transaction is suspended. In this way, additional time overheads caused by the node switchover can be reduced to a great extent, and user experience can be improved.

FIG. 3 is a diagram of an implementation environment according to an embodiment of this application. The implementation environment includes at least one client 301, a scheduling node 302, and a cloud-native database system 303. The client 301 may establish a communication connection to the cloud-native database system 303 via the scheduling node 302. The communication connection may be a wired connection or a wireless connection. This is not limited in embodiments of this application.

The client 301 is configured to send, to the cloud-native database system 303 via the scheduling node 302, an SQL statement included in a target transaction.

The scheduling node 302 is configured to: receive a transaction processing request sent by the client 301, and establish the communication connection between the client 301 and the cloud-native database system 303.

The cloud-native database system 303 is configured to: process the target transaction, execute the SQL statement included in the target transaction, and return, to the client 303 via the scheduling node 302, an intermediate result obtained in a process of processing the target transaction, a final result obtained by processing the target transaction, and the like.

As shown in FIG. 4, the cloud-native database system 303 may include a first database computing node 3031, a second database computing node 3032, a database state node 3033, and a database storage node 3034. The first database computing node 3031 and the second database computing node 3032 are configured to process a transaction requested by a user, the database state node 3033 is configured to store state information of the transaction, and the database storage node 3034 is configured to store data of a database.

For example, as shown in FIG. 4, the first database computing node 3031, the second database computing node 3032, and the database storage node 3034 may be directly connected through a bypass in addition to being indirectly connected via the intermediate database state node 3032.

The client 301 may be any electronic product that can perform human-machine interaction with a user in one or more manners such as a keyboard, a touchpad, a touchscreen, a remote control, a voice interaction device, or a handwriting device, for example, a personal computer (personal computer, PC), a mobile phone, a smartphone, a personal digital assistant (personal digital assistant, PDA), a wearable device, a palmtop computer (pocket PC, PPC), a tablet, a smart car, a smart television, or a smart sound box.

The scheduling node 302, the database state node 3033, and the database storage node 3034 may all be servers, virtual machines, containers, or the like.

The first database computing node 3031 and the second database computing node 3032 are servers, virtual machines, containers, or the like on which database instances can be deployed.

In actual application, the database state node 3032 and the first database computing node 3031, the second database computing node 3032, or the database storage node 3034 may be jointly deployed in a same computing device cluster (where the computing device cluster is, for example, a server cluster, a virtual machine cluster, or a container cluster), or the database state node 3032 may be independently deployed in a separate computing device cluster. A person skilled in the art should understand that forms of the client, the scheduling node, the database state node, the database storage node, the first database computing node, and the second database computing node are merely examples. Any other existing or future form that is applicable to embodiments of this application should also fall within the protection scope of embodiments of this application, and be included herein by reference.

It should be noted that the application scenario and the implementation environment that are described in embodiments of this application are intended to describe the technical solutions in embodiments of this application more clearly, and do not constitute a limitation on the technical solutions provided in embodiments of this application. A person of ordinary skill in the art may be aware that, with emergence of a new application scenario and evolution of the implementation environment, the technical solutions provided in embodiments of this application are also applicable to a similar technical problem. For example, the foregoing implementation environment may not include the scheduling node.

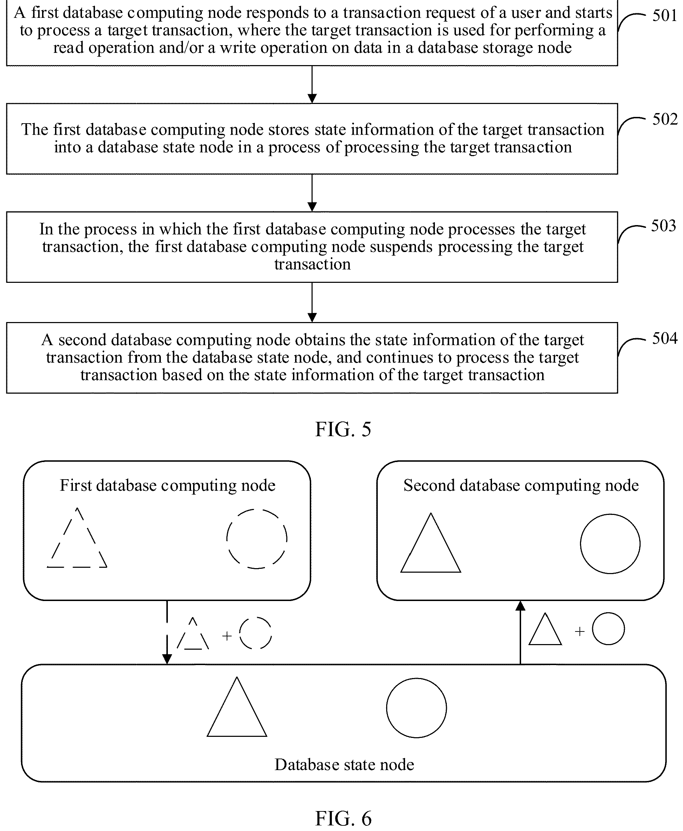

FIG. 5 is a flowchart of a transaction processing method according to an embodiment of this application. The method is applied to a cloud-native database system. The cloud-native database system may be the cloud-native database system described above. To be specific, the cloud-native database system includes a first database computing node, a second database computing node, a database state node, and a database storage node, the first database computing node and the second database computing node are configured to process a transaction requested by a user, the database state node is configured to store state information of the transaction, and the database storage node is configured to store data of a database. Refer to FIG. 5. The method includes the following steps.

**Step 501:** The first database computing node responds to a transaction request of the user and starts to process the target transaction, where the target transaction is used for performing a read operation and/or a write operation on the data in the database storage node.

One database storage node may store a plurality of databases, and one database may include one or more data tables. One target transaction is usually used for performing a read operation and/or a write operation on data in one or more data tables.

In some embodiments, when the user initiates, on a client, the transaction request for the target transaction, a scheduling node receives the transaction request, and sends the transaction request to the first database computing node. The first database computing node responds to the transaction request and starts to process the target transaction. Optionally, in a case in which the foregoing implementation environment does not include the scheduling node, the client may further send the transaction request to the first database computing node in another manner. The following uses an example in which the foregoing implementation environment includes the scheduling node for description.

Database computing nodes in a cloud-native database system usually include two types: a read-only node and a read-write node. In this embodiment of this application, when an operation type corresponding to the target transaction is a read-only operation, the first database computing node may be a read-only node, or may be a read-write node; or when the operation type corresponding to the target transaction includes the write operation, the first database computing node is a read-write node.

The target transaction includes at least one SQL statement. A process in which the first database computing node processes the target transaction is a process in which the first database computing node executes the SQL statement included in the target transaction. The SQL statement included in the target transaction is sent by the client to the scheduling node, and then sent by the scheduling node to the first database computing node.

In addition, the target transaction may be specified workload, or may be unspecified workload. This is not limited in this embodiment of this application.

When the target transaction is the specified workload, the SQL statement included in the target transaction is specified. In this case, the first database computing node may receive all SQL statements included in the target transaction at one time. When the target transaction is the unspecified workload, the SQL statement included in the target transaction is unspecified. For example, the user may enter statements in real time through an interaction interface of the client. In this case, the first database computing node may receive the SQL statements one by one. Apparently, regardless of whether a plurality of SQL statements are received at one time or the SQL statements are received one by one, the first database computing node executes the SQL statements one by one according to a sequence of the SQL statements included in the target transaction.

In addition, a data page is a basic unit of a database for storage. When executing an SQL statement, the first database computing node reads, from the database storage node, an entire data page in which data to be operated based on the SQL statement is located, and places the read data page into a buffer pool (buffer pool) of a local memory of the first database computing node. When executing the target transaction, the first database computing node actually performs the read operation and/or the write operation on the corresponding data page in the buffer pool. In this way, a quantity of times that the first database computing node accesses the database storage node can be reduced, and data processing efficiency can be improved.

**Step 502:** The first database computing node stores the state information of the target transaction into the database state node in the process of processing the target transaction.

It can be learned from the foregoing descriptions that the process in which the first database computing node processes the target transaction is a process of sequentially executing the SQL statements included in the target transaction. The SQL statements included in the target transaction may include a write operation statement (for example, addition, deletion, or modification) and/or a read operation statement (for example, query). When the SQL statement executed by the first database computing node is the read operation statement, the first database computing node performs the read operation, in other words, the target transaction is used for performing the read operation. When the SQL statement executed by the first database computing node is the write operation statement, the first database computing node performs a write operation, in other words, the target transaction is used for performing the write operation.

In some embodiments, the state information of the target transaction includes a table locked state of the write operation that is being performed, a log of the target transaction, a query plan tree and an intermediate result of the read operation statement in the target transaction, and the like.

When being used for performing the write operation, the target transaction locks a data table that is being used for the write operation, and records the table locked state in the data table in the local buffer pool, so that a transaction other than the target transaction cannot be used for performing an operation on the data table that is being used for the write operation. In addition, when performing the write operation, the first database computing node further records, in the log of the target transaction, a state of the write operation performed on data.

When preparing to execute the read operation statement, the first database computing node generates the query plan tree of the read operation statement, and then the first database computing node executes the read operation statement based on the query plan tree. In a process in which the first database computing node executes the read operation statement based on the query plan tree, some intermediate results, for example, a current data cursor (to be specific, a location of a data page that is read is recorded) and an index result obtained when indexing ends (to be specific, indexing may be performed first during data search, and then specific data is determined) are generated.

Storage of the state information is described below the following step 404, and is not described herein.

Optionally, the state information of the target transaction further includes a session state of the target transaction.

Each time the client starts a transaction, the client initiates one transaction request to establish a connection to the database computing node via the scheduling node. Each connection corresponds to one session state. For the target transaction, the session state of the target transaction may include an identifier of the target transaction, some execution parameters, an isolation level of the target transaction, an identifier of the client that initiates the transaction request of the target transaction, a language preference, and the like.

In some embodiments, the first database computing node stores the session state of the target transaction into the database state node in the process of processing the target transaction.

In this way, when the target transaction needs to be switched over to another database computing node for execution, the scheduling node may obtain the session state of the target transaction from the database state node, and the scheduling node may learn of information such as the identifier of the client that initiates the transaction request of the target transaction and the identifier of the target transaction. In this way, the scheduling node may switch over the target transaction from the first database computing node to the another database computing node, and does not switch over an incorrect transaction or switch over the target transaction to an inappropriate computing node, and a connection between the client and the database computing node to which the target transaction is switched over can be successfully established without re-sending a transaction request by the client, so that node switchover is imperceptible to the user.

In some embodiments, the first database computing node stores the state information of the target transaction into the database state node based on an RDMA technology or a CXL technology.

The RDMA technology allows a user program to bypass an operating system kernel to directly interact with a network adapter and communicate with a network. The CXL technology also features a high bandwidth and a low latency, and is often applied to the fields of high-performance computing, cloud computing, and the like. The state information is transferred based on the RDMA technology or the CXL technology, so that a network bandwidth in a transfer process of the state information can be improved, and a latency in the transfer process can be reduced, thereby improving efficiency of transferring the state information of the target transaction from the first database computing node to the database state node, and improving performance of the cloud-native database system.

In some embodiments, the first database computing node stores the state information of the target transaction into the database state node in an RDMA write manner.

When information is transferred based on the RDMA technology, there are two transfer manners: the RDMA write manner and an RDMA read manner. In comparison with the RDMA read manner, the RDMA write manner has a higher throughput, that is, has a higher network bandwidth. Therefore, in a process in which the first database computing node stores the state information of the target transaction into the database state node based on the RDMA technology, the state information of the target transaction is transferred in the RDMA write manner. In this way, the network bandwidth in the transfer process of the state information can be further improved, thereby further improving the efficiency of transferring the state information of the target transaction from the first database computing node to the database state node.

For the database state node, transferring the state information from the first database computing node to the database state node based on the RDMA technology or the CXL technology may be implemented through an application programming interface including an RDMA library or a CXL library. The application programming interface may be referred to as a state disaggregated application programming interface (state disaggregated API).

In some embodiments, a persistent memory is used for the database state node to store the state information of the transaction.

In a current cloud-native database technology, when a transaction is to be committed, a log of the transaction needs to be written into a disk of the database storage node for persistent storage, and then a transaction commitment can be completed. If a volatile memory is used for the database state node, when a transaction is committed, a log of the transaction is written into the database storage node, and then a transaction commitment is completed. In this way, in a process of processing the transaction, it is equivalent to that the log of the transaction needs to be first written into the database state node from the first database computing node, and then needs to be written into the database storage node from the database state node. The log of the transaction needs to pass through network links at two layers, resulting in performance deterioration of the cloud-native database system.

Therefore, when the persistent memory is used for the database state node to store the state information of the transaction, after the first database computing node writes the log of the transaction into a state layer, the log of the transaction is asynchronously flushed to the database state node at subsequent time. After the log of the transaction is written into the database state node from the first database computing node, the transaction can be committed without waiting for the log of the transaction to be flushed to the database storage node. In this way, an increase in response time of the target transaction to the client can be avoided, and the performance deterioration of the cloud-native database system caused because the log of the target transaction needs to pass through the network links at two layers to complete the commitment can be avoided.

In addition, if the volatile memory (that is, a non-persistent memory) is used for the database state node to store the state information of the transaction, the first database computing node may further directly store, through a bypass, the log of the transaction into the database storage node. In this way, the transaction commitment can also be completed after the log of the transaction passes through only a network link at one layer. It should be noted that, in this implementation, at subsequent time, the log of the transaction is further transferred from the database storage node to the database state node, so that the computing node to which the transaction is switched over can also obtain the state information, namely, the log of the transaction, from the state node.

**Step 503:** In the process in which the first database computing node processes the target transaction, the first database computing node suspends processing the target transaction.

The first database computing node may suspend processing the target transaction when cross-node scale-out or cross-node scale-in needs to be performed, or a fault occurs, and then the target transaction is switched over to the second database computing node by the scheduling node. In addition, in some cases, to balance resources used by all database computing nodes, the scheduling node may switch over the target transaction from the first database computing node to another database computing node for processing. In this case, the first database computing node also suspends processing the target transaction.

Database computing node switchover caused by the cross-node scale-out or cross-node scale-in, and database computing node switchover caused by balancing, by the scheduling node, the resources used by all the database computing nodes are database computing node switchover in a planned scenario, and database computing node switchover caused by the fault is database computing node switchover in an unplanned scenario. In other words, the planned scenario is a scenario in which the first database computing node learns of a switchover plan of the database computing node in advance, and the unplanned scenario is a scenario in which the first database computing node does not learn of the switchover plan of the database computing node in advance.

It should be noted that the second database computing node and the first database computing node may be of a same node type or different node types. When the operation type corresponding to the target transaction is the read-only operation, the second database computing node may be a read-only node, or may be a read-write node; or when the operation type corresponding to the target transaction includes the write operation, the first database computing node is a read-write node.

In some embodiments, when database computing node switchover is performed in the planned scenario, the scheduling node disconnects from the first database computing node, and establishes a connection to the second database computing node, so as to establish a connection between the client and the second database computing node.

In some embodiments, if the scheduling node detects that the first database computing node is faulty, the scheduling node also disconnects from the first database computing node, and establishes the connection to the second database computing node, so as to establish the connection between the client and the second database computing node. This section describes the database computing node switchover in the unplanned scenario.

**Step 504:** The second database computing node obtains the state information of the target transaction from the database state node, and continues to process the target transaction based on the state information of the target transaction.

In some embodiments, the second database computing node obtains the state information of the target transaction from the database state node based on the RDMA technology or the CXL technology. In this way, the network bandwidth in the transfer process of the state information can be improved, a transfer latency of the state information can be reduced, and efficiency of obtaining the state information of the target transaction by the second database computing node can be improved, thereby reducing additional time overheads caused by the database computing node switchover, and improving user experience.

In some embodiments, the second database computing node obtains the state information of the target transaction from the database state node in the RDMA write manner. In this way, the network bandwidth in the transfer process of the state information can be further improved, and the efficiency of obtaining the state information of the target transaction by the second database computing node can be further improved, thereby further reducing the additional time overheads caused by the database computing node switchover, and improving user experience.

For the database state node, transferring the state information from the database state node to the second database computing node based on the RDMA technology or the CXL technology may also be implemented through the state disaggregated API described above.

In some embodiments, before database computing node switchover, the scheduling node records a suspension cursor location of the target transaction, where the suspension cursor location indicates an SQL statement that is being executed in the target transaction before the target transaction is suspended. After the scheduling node establishes the connection between the client and the second database computing node, the scheduling node sends, to the second database computing node based on the suspension cursor location, the SQL statement that is being executed in the target transaction before the target transaction is suspended and a to-be-executed SQL statement in the target transaction, so that the second database computing node continues to execute the target transaction.

The state information of the target transaction is stored into the database state node, and the second database computing node obtains the state information of the target transaction from the database state node, so that the second database computing node can continue to process the target transaction based on a state obtained before the target transaction is suspended. That is, in this embodiment of this application, resumable processing can be implemented at a transaction granularity.

In some embodiments, the state information of the target transaction is used for recording an execution state of the SQL statement that is being executed in the target transaction before the target transaction is suspended; and that the second database computing node continues to process the target transaction based on the state information of the target transaction includes: The second database computing node continues, based on the execution state of the SQL statement that is being executed in the target transaction before the target transaction is suspended, to execute the SQL statement that is being executed in the target transaction.

An execution state of an SQL statement in the target transaction is state information related to the SQL statement in the state information of the target transaction. If an SQL statement is the write operation statement, an execution state of the SQL statement may include an operating state (recorded in the log of the target transaction) of the write operation corresponding to the SQL statement, a table locked state of the write operation corresponding to the SQL statement, and the like. If an SQL statement is the read operation statement, an execution state of the SQL statement may include a query plan tree and an intermediate result that correspond to the SQL statement, and the like.

If an SQL statement is the read operation statement, a query plan tree of the SQL statement is a tree structure of a query plan of the SQL statement, and is used for guiding an execution step of the SQL statement, and an intermediate result of the SQL statement corresponding to the read operation is a result obtained through some execution steps of a query plan tree of the SQL statement (excluding a final execution result of the SQL statement).

The execution state of the SQL statement that is being executed in the target transaction before the target transaction is suspended is stored into the database state node, and the second database computing node continues to execute the SQL statement based on the execution state of the SQL statement, thereby actually implementing resumable processing at a statement granularity.

The SQL statement that is being executed before the target transaction is suspended may be the write operation statement or the read operation statement. In the two cases, possible implementations of step 502 and step 503 are different. The following describes three implementations of step 502 and step 504.

**In a first implementation,** step 502 includes: The first database computing node stores the log of the target transaction into the database state node; and step 504 includes: The second database computing node continues, based on the log of the target transaction in the database state node, to perform the write operation that is being performed in the target transaction before the target transaction is suspended.

It should be noted that, in the process in which the first database computing node executes the target transaction, an operating state of each write operation is recorded in the log of the target transaction, and is stored into the database state node. In this way, the second database computing node may obtain, based on the log of the target transaction, a location at which the write operation that is being performed in the target transaction before the target transaction is suspended is performed, an operating state of the write operation that has been performed, and the like, so as to continue to perform the write operation that is being performed in the target transaction before the target transaction is suspended.

Optionally, the database storage node includes a log buffer (log buffer), where the log buffer is configured to store the log of the transaction. In this case, step 502 includes: The first database computing node stores the log of the target transaction into the log buffer of the database state node.

In addition, if the SQL statement that is being executed in the target transaction before the target transaction is suspended is an index creation statement, step 502 may further include: The first database computing node also stores, into the database state node, an index file corresponding to a data table related to the SQL statement that is being executed before the target transaction is suspended; and step 504 may further include: The second database computing node continues, based on the log of the target transaction in the database state node and the index file corresponding to the data table related to the SQL statement that is being executed before the target transaction is suspended, to perform the write operation that is being performed in the target transaction before the target transaction is suspended. In this way, index rebuilding and combination can be continued after the database computing node switchover.

For example, it is assumed that the SQL statement that is being executed in the target transaction before the target transaction is suspended is "Create Index index_1 On R (A)". To be specific, an operation of creating an index index_1 of data in a column A of a table R is being performed before the target transaction is suspended. As shown in FIG. 6, it is assumed that an index file corresponding to the data table is an index file INDEX (a triangle in FIG. 6). In this case, the first database node needs to store the log (a circle in FIG. 6) of the target transaction and the index file INDEX into the database state node. In this way, after the database computing node switchover, the second database computing node may pull out, from the database state node, the index file INDEX and the log that is of the target transaction and that records the execution state of the SQL statement, so that the SQL statement can continue to be executed, and the index rebuilding and combination can be completed.

In some embodiments, step 502 further includes: The first database computing node stores, into the database state node, the table locked state of the write operation that is being performed in the target transaction before the target transaction is suspended; and step 504 includes: The second database computing node continues, based on the log of the target transaction in the database state node and the table locked state of the write operation that is being performed in the target transaction before the target transaction is suspended, to perform the write operation that is being performed in the target transaction before the target transaction is suspended.

It should be noted that a table locked state corresponding to a write operation is actually generated before the write operation is performed, and the first database computing node actually stores, into the database state node, a table locked state corresponding to a write operation immediately after the table locked state corresponding to the write operation is generated.

Optionally, the database storage node includes an active transaction list (active tran list), where the active trans list is used for storing the log of the transaction. In this case, step 502 includes: The first database computing node stores, into the active tran list of the database state node, the table locked state of the write operation that is being performed in the target transaction before the target transaction is suspended.

The second database computing node records, in a corresponding data table in a buffer pool of the second database computing node, the table locked state of the write operation that is being performed in the target transaction before the target transaction is suspended. In this way, the second database computing node does not need to lock the data table again, thereby saving time of another table lock operation. In addition, it can be further ensured that when the second database computing node continues to perform the target transaction, another transaction executed by the second database computing node cannot be used for performing an operation on the data table that is being used for the write operation of the target transaction. This can prevent a plurality of transactions from concurrently being used for performing write operations on one data table, thereby ensuring data consistency and validity.

For example, it is assumed that SQL statements included in the target transaction are as follows:

```
BEGIN TRANSACTION;
INSERT INTO R VALUES (100, 'xxx');
COMMIT;
```

It is assumed that the second database computing node further executes another transaction, and SQL statements included in the transaction are as follows:

```
BEGIN TRANSACTION;
INSERT INTO R VALUES (200, 'aaa');
COMMIT;
```

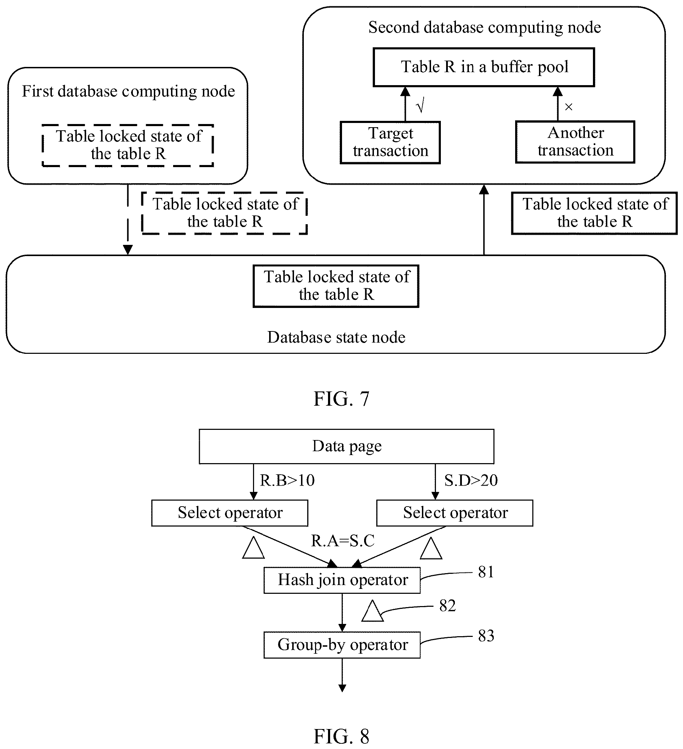

It can be learned that, specific content needs to be inserted into the table R for both the two transactions, and both the two transactions include a write operation on the table R. As shown in FIG. 7, it is assumed that a statement that is being executed in the target transaction before the target transaction is suspended is INSERT INTO R VALUES (100, 'xxx'). To be specific, the write operation on the table R is being performed in the target transaction before the target transaction is suspended. The first database computing node stores the table locked state of the table R into the database state node. In this case, after the target transaction is switched over to the second database computing node, the second database computing node can obtain the table locked state from the database state node, and when continuing to perform the write operation, the second database computing node does not need to lock the table R again. In addition, it can be further ensured that when the second database computing node continues to perform the write operation, the another transaction executed by the second database computing node cannot be used for performing the write operation on the table R, thereby ensuring consistency and validity of data in the table R.

In the first implementation, the log of the target transaction is recorded in real time and stored into the database state node in the entire process of executing the target transaction, and a table locked state corresponding to a write operation is actually generated before the write operation is performed and is stored into the database state node. Therefore, even if the first database computing node is suddenly faulty in a process of executing a write operation, an operating state of the write operation has been recorded in the log of the target transaction, and has been stored into the database state node, and a table locked state of the write operation has also been stored into the database state node. Therefore, for a case in which the write operation is being performed before the target transaction is suspended, regardless of the node switchover in the unplanned scenario or the node switchover in the unplanned scenario, in this embodiment of this application, the resumable processing can be performed at the transaction granularity or even the statement granularity.

**In a second implementation,** step 502 includes: The first database computing node stores, into the database state node, the query execution plan tree and the intermediate result of the SQL statement that corresponds to the read operation and that is being executed in the target transaction before the target transaction is suspended; and step 504 includes: The second database computing node continues, based on the query execution plan tree and the intermediate result, in the database state node, of the SQL statement that corresponds to the read operation and that is being executed in the target transaction before the target transaction is suspended, to perform the read operation that is being performed in the target transaction before the target transaction is suspended.

It should be noted that the stored intermediate result is a latest intermediate result before the target transaction is suspended.

Optionally, the active tran list included in the database state node is further used for storing a query plan tree and an intermediate result of an SQL statement that corresponds to the write operation and that is being executed before the target transaction is suspended. In this case, step 502 includes: The first database computing node stores, into the active tran list of the database state node, the query execution plan tree and the intermediate result of the SQL statement that corresponds to the read operation and that is being executed in the target transaction before the target transaction is suspended.

In other words, in the planned scenario, before the database computing node switchover, the first database computing node stores, into the database storage node, the query plan tree and the latest intermediate result of the SQL statement that corresponds to the read operation and that is being executed in the target transaction. In this way, after the node switchover, the second database computing node does not need to regenerate a query plan tree, and does not need to re-execute the SQL statement corresponding to the read operation. Instead, the second database computing node may directly continue, based on the query plan tree and the latest intermediate result that are obtained from the database storage node, to perform the read operation that is being performed before the target transaction is suspended. In this way, time and resource overheads for regenerating the query plan tree and performing redo are avoided, and user experience can be improved.

For example, it is assumed that SQL statements included in the target transaction are as follows:

```
BEGIN TRANSACTION;
SELECT R.B, sum(S.D)
FROM R, S
WHERE
```

$$R.A = S.C \text{ AND } R.B > 10 \text{ AND } S.D > 20$$

GROUP BY R.B;
COMMIT;

FIG. 8 shows a process in which the target transaction is used for sequentially executing all operators based on a query plan tree of a SELECT statement. The operators mainly include a select operator (select), a hash join operator (hash join), and a group-by operator (group-by). Triangles in FIG. 8 represent some intermediate results obtained by executing the operators. It is assumed that before the database computing node switchover, the first database computing node just completes executing an operator 81 in FIG. 8 and is executing an operator 83. In this case, the first database computing node stores, into the database state node, the query plan tree of the SELECT statement and an intermediate result 82 in FIG. 8. In this way, after the database computing node switchover, the second database computing node may directly obtain the query plan tree of the SELECT statement and the intermediate result 82 in FIG. 8 from the database state node, and the second database computing node may continue to execute the operator 83 in FIG. 8, to continue to execute the read operation that is being performed in the target transaction before the target transaction is suspended.

In the second implementation, before the switchover, the first database computing node needs to store, into the database state node, the latest intermediate result and the SQL statement that corresponds to the read operation and that is being executed in the target transaction before the target transaction is suspended. Therefore, the first database needs to learn of a switchover plan. It can be learned that the foregoing method is applicable to the database computing node switchover in the planned scenario. In other words, for a case in which the read operation is being performed before the target transaction is suspended, after the database computing node switchover is performed in the planned scenario, in this embodiment of this application, the resumable processing can also be performed at the transaction granularity or even the statement granularity.

**In a third implementation,** step 502 includes: The first database computing node stores, into the state node in the process of processing the target transaction, the SQL statement that corresponds to the read operation and that is currently being executed in the target transaction; and step 504 includes: The second database computing node re-executes the SQL statement that corresponds to the read operation and that is being executed in the target transaction before the target transaction is suspended.

Optionally, the active tran list included in the database state node is further used for storing the SQL statement that corresponds to the read operation and that is currently being executed in the target transaction. In this case, step 502 includes: The first database computing node stores, into the active tran list of the database state node, the SQL statement that corresponds to the read operation and that is currently being executed in the target transaction.

It can be learned from the foregoing descriptions that the scheduling node may record the suspension cursor location of the target transaction, so that after the database computing node switchover, the scheduling node can send, to the second database computing node, the SQL statement that is being executed in the target transaction before the target transaction is suspended and the to-be-executed SQL statement in the target transaction. Therefore, the first database computing node may not store the SQL statement that corresponds to the read operation and that is currently being executed in the target transaction. After the database computing node switchover, the second database computing node directly obtains the SQL statement that is being executed in the target transaction before the target transaction is suspended and that is sent by the scheduling node, so as to re-execute the SQL statement that corresponds to the read operation and that is currently being executed in the target transaction.

When database computing node switchover is performed in the unplanned scenario, the first database computing node does not know when database computing node switchover is performed, and therefore does not know when the latest intermediate result should be stored. Therefore, the foregoing second implementation cannot be used. In the unplanned scenario, if resumable processing of the read operation can be performed as that in the planned scenario, the intermediate result needs to be stored periodically. However, this causes large resource overheads. Therefore, in this embodiment of this application, the first database computing node stores, into the database state node, one SQL statement that is being executed at each moment in the process of processing the target transaction, so that the second database computing node can subsequently obtain the SQL statement that is being executed before the target transaction is suspended, to re-execute the statement. In other words, for a case in which the read operation is being performed before the target transaction is suspended, after database computing node switchover is performed in the unplanned scenario, in this embodiment of this application, the SQL statement corresponding to the read operation may be redone.

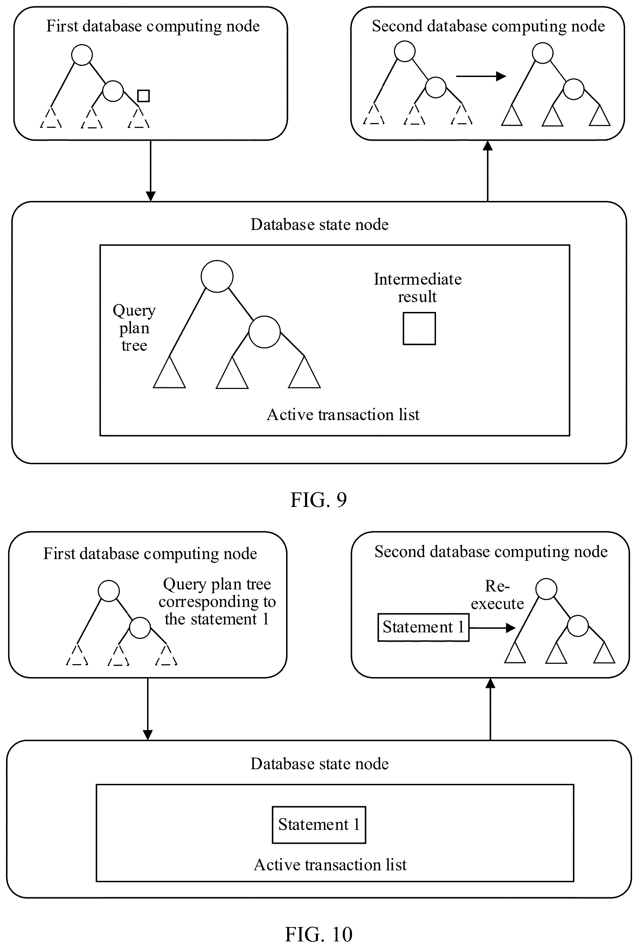

As shown in FIG. 9, FIG. 9 shows a possible case in which switchover is performed in a planned scenario when a read operation is being performed before a target transaction is suspended. In FIG. 9, dashed-line triangles in a first database computing node represent some operators that are not executed before the target transaction is suspended. It can be learned from the figure that after obtaining a query plan tree and an intermediate result that are stored in an active transaction list of a database state node, a second database computing node may continue to execute the some uncompleted operators, so as to implement resumable processing of an SQL statement corresponding to the query plan tree. As shown in FIG. 10, FIG. 10 shows a possible case in which switchover is performed in an unplanned scenario when a read operation is being performed before a target transaction is suspended. In FIG. 10, dashed-line triangles in a first database computing node represent some operators that are not executed before the target transaction is suspended. It can be learned from the figure that before the target transaction is suspended, the first database computing node sends only a statement 1 to a database state node, and after obtaining the statement 1 stored in an active transaction list of the database state node, a second database computing node may re-execute the statement 1.

In some embodiments, step 502 further includes: The first database computing node stores, into the database state node in the process of processing the target transaction, an execution result of the SQL statement that corresponds to the read operation and that has been executed in the target transaction; and step 504 further includes: After re-executing the SQL statement that corresponds to the read operation and that is currently being executed in the target transaction, the second database computing node continues to process the target transaction based on the execution result, in the database state node, of the SQL statement that corresponds to the read operation and that has been executed in the target transaction.

In this way, if an execution result of an SQL statement corresponding to a previous read operation needs to be used (where this case is rare) when the target transaction is subsequently processed, the execution result may be directly used. This helps implement the resumable processing at the transaction granularity.

In conclusion, in this embodiment of this application, the state information that is of the target transaction and that needs to be maintained by the database state node may include: the log of the target transaction, the table locked state of the write operation that is being performed in the target transaction before the target transaction is suspended, the query plan tree and the intermediate result of the SQL statement that corresponds to the read operation and that is being executed in the target transaction before the target transaction is suspended, the SQL statement that is being executed before the target transaction is suspended, the execution result of the SQL statement that corresponds to the read operation and that has been executed in the target transaction, and the session state of the target transaction. Table 1 below lists functions/definitions, application scenarios, and common application statements of the state information.

Table 1

| State information | Function/Definition | Application scenario | Common application statement |
|---|---|---|---|
| Log of the target transaction | Record the operating state of the write operation in the target transaction | The write operation is being performed before the target transaction is suspended | DDL statement, Update statement, and the like |
| Table locked state of the write operation that is being performed in the target transaction before the target transaction is suspended | Lock the data table that is being used for the write operation so that the another transaction cannot be used for performing an operation on the data table that is being used for the write operation | The write operation is being performed before the target transaction is suspended | DDL statement, Update statement, and the like |
| Query plan tree and intermediate result of the SQL statement that corresponds to the read operation and that is being executed in the target transaction before the target transaction is suspended | The query plan tree is used for guiding an execution step of the SQL statement, and the intermediate result is the result obtained through some execution steps of the query plan tree of the SQL statement (excluding the final execution result) | The read operation is being performed before the target transaction is suspended, and the database computing node switchover is the switchover in the planned scenario | Select statement and the like |
| SQL statement that is being executed before the target transaction is suspended | Used for redoing the statement subsequently | The read operation is being performed before the target transaction is suspended, and the database computing node switchover is the switchover in the unplanned scenario | Select statement and the like |

(continued)

| State information | Function/Definition | Application scenario | Common application statement |
|---|---|---|---|
| Execution result of the SQL statement that corresponds to the read operation and that has been executed in the target transaction | Help implement the resumable processing at the transaction granularity | The read operation is being performed before the target transaction is suspended | Select statement and the like |
| Session state of the target transaction | The session state of the target transaction may include the identifier of the target transaction, the some execution parameters, the isolation level of the target transaction, the identifier of the client that initiates the transaction request of the target transaction, the language preference, and the like | All scenarios | All Statements |

In some embodiments, the first database computing node pushes down, to the database storage node for execution, a target operator of the SQL statement that is being executed in the target transaction before the target transaction is suspended, where the target operator is a part of operators included in the query execution plan tree of the SQL statement that is being executed.

The part of operators is pushed down to the database storage node for execution, so that an amount of data transmitted between the database storage node and the first database computing node can be reduced, and a speed of processing the target transaction by the entire cloud-native database system can be accelerated.

In some embodiments, after executing the target operator, the database storage node stores an execution result of the target operator. In this way, when the second database computing node needs the execution result of the target operator, the second database computing node may directly obtain the execution result of the target operator from the database storage node, thereby avoiding a process of transferring the state information from the database storage node to the database state node.

In this case, after the first database computing node suspends processing the target transaction, the second database computing node obtains the state information of the target transaction from the database state node, and obtains the execution result of the target operator from the database storage node; and the second database computing node continues, based on the state information of the target transaction and the execution result of the target operator, to execute the SQL statement that is being executed in the target transaction before the target transaction is suspended.

For example, for a statement "select xx from t1, t2 where t1.c = t2.c", a selection operation may be first performed on the database storage node, to select two data tables t1 and t2, and then a join operation continues to be performed on data in the two tables on the first database computing node.

Finally, it should be noted that, in this embodiment of this application, a fault tolerance daemon process in the database state node may be used for recovering an SQL statement during the database computing node switchover. The fault tolerance daemon process is in the application programming interface of the database state node. For example, the fault tolerance daemon process is in the foregoing state disaggregated API.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In this embodiment of this application, in the process of executing the target transaction, the first database computing node sends the state information of the target transaction to the database state node, and the database state node stores the state information. In this way, when the first database computing node suspends executing the target transaction, and the target transaction is switched over to the second database computing node for execution, the second database computing node may obtain the state information of the target transaction from the database state node. In this way, based on the corresponding state information, when an operation that is being performed in the target transaction before the target transaction is suspended is a write operation, the write operation does not need to be rolled back or redone after the node switchover is completed in the planned scenario or the unplanned scenario, but resumable processing may be implemented at the transaction granularity or even the statement granularity. When an operation that is being performed in the target transaction before the target transaction is suspended is a read operation, after the node switchover in the planned scenario is completed, the second database computing node may continue to perform the read operation, and if there is the node switchover in the unplanned scenario, the second database computing node may re-execute an SQL statement corresponding to the read operation. In this way, additional time overheads caused by the node switchover can be reduced to a great extent, and user experience can be improved. In addition, because the session state of the target transaction is also stored into the database state node, the scheduling node may directly perform node switchover, and a connection between the client and the database computing node to which the target transaction is switched over can be successfully established without re-sending a transaction request by the client, so that node switchover is imperceptible to the user.

Embodiments of this application further provide a cloud-native database system. The cloud-native database system includes a first database computing node, a second database computing node, a database state node, and a database storage node, the first database computing node and the second database computing node are configured to process a transaction requested by a user, the database state node is configured to store state information of the transaction, and the database storage node is configured to store data of a database.

The first database computing node is specifically configured to respond to a transaction request of the user and start to process a target transaction, where the target transaction is used for performing a read operation and/or a write operation on the data in the database storage node. The first database computing node is further specifically configured to store state information of the target transaction into the database state node in a process of processing the target transaction. In the process in which the first database computing node processes the target transaction, the first database computing node is further specifically configured to suspend processing the target transaction. The second database computing node is specifically configured to: obtain the state information of the target transaction from the database state node, and continue to process the target transaction based on the state information of the target transaction.

Optionally, the target transaction includes at least one structured query language SQL statement, and the state information of the target transaction is used for recording an execution state of an SQL statement that is being executed in the target transaction before the target transaction is suspended. The second database computing node is specifically configured to continue, based on the execution state of the SQL statement that is being executed in the target transaction before the target transaction is suspended, to execute the SQL statement that is being executed in the target transaction.

Optionally, the first database computing node is specifically configured to store a log of the target transaction into the database state node. The second database computing node is specifically configured to continue, based on the log of the target transaction in the database state node, to perform the write operation that is being performed in the target transaction before the target transaction is suspended.

Optionally, the first database computing node is further specifically configured to store, into the state node, a table locked state of the write operation that is being performed in the target transaction before the target transaction is suspended. The second database computing node is further specifically configured to continue, based on the log of the target transaction in the database state node and the table locked state of the write operation that is being performed in the target transaction before the target transaction is suspended, to perform the write operation that is being performed in the target transaction before the target transaction is suspended.

Optionally, the first database computing node is specifically configured to store, into the database state node, a query execution plan tree and an intermediate result of the SQL statement that corresponds to the read operation and that is being executed in the target transaction before the target transaction is suspended. The second database computing node is specifically configured to continue, based on the query execution plan tree and the intermediate result, in the database state node, of the SQL statement that corresponds to the read operation and that is being executed in the target transaction before the target transaction is suspended, to perform the read operation that is being performed in the target transaction before the target transaction is suspended.

Optionally, the first database computing node is specifically configured to: in the process of processing the target transaction, store, into the database state node, an SQL statement that corresponds to the read operation and that is currently being executed in the target transaction. The second database computing node is specifically configured to re-execute the SQL statement that corresponds to the read operation and that is being executed in the target transaction before the target transaction is suspended.

Optionally, the first database computing node is further specifically configured to store, into the database state node in the process of processing the target transaction, an execution result of the SQL statement that corresponds to the read operation and that has been executed in the target transaction. The second database computing node is further specifically configured to: after re-executing the SQL statement that corresponds to the read operation and that is currently being executed in the target transaction, continue to process the target transaction based on the execution result, in the database state node, of the SQL statement that corresponds to the read operation and that has been executed in the target transaction.

Optionally, a persistent memory is used for the database state node to store the state information of the transaction.

Optionally, the first database computing node is further specifically configured to push down, to the database storage node for execution, a target operator of the SQL statement that is being executed in the target transaction before the target transaction is suspended, where the target operator is a part of operators included in the query execution plan tree of the SQL statement that is being executed. The database storage node is further specifically configured to store an execution result of the target operator. After the first database computing node suspends processing the target transaction, the second database computing node is further specifically configured to: obtain the state information of the target transaction from the database state node, and obtain the execution result of the target operator from the database storage node. The second database computing node is further specifically configured to continue, based on the state information of the target transaction and the execution result of the target operator, to execute the SQL statement that is being executed in the target transaction before the target transaction is suspended.

Optionally, the state information of the target transaction further includes a session state of the target transaction.

Optionally, the first database computing node is specifically configured to store the state information of the target transaction into the database state node based on an RDMA technology or a CXL technology; and/or

the second database computing node is specifically configured to obtain the state information of the target transaction from the database state node based on the RDMA technology or the CXL technology.

Optionally, the first database computing node is specifically configured to suspend processing the target transaction when cross-node scale-out or cross-node scale-in needs to be performed, or a fault occurs.

It may be clearly understood by a person skilled in the art that, for the purpose of convenient and brief description, for a detailed working process of the foregoing cloud-native database system and specific implementation of various operations of the transaction processing method in the foregoing method embodiments, reference may be made to a corresponding process in the foregoing method embodiments, and details are not described herein again.

In this embodiment of this application, an architecture of the cloud-native database system is an architecture in which storage, computing, and a state are decoupled. In addition to the database computing node and the database storage node, the cloud-native database system further includes the database state node. In the process of executing the target transaction, the first database computing node sends the state information of the target transaction to the database state node, and the database state node stores the state information. When the first database computing node suspends executing the target transaction, and the target transaction is switched over to the second database computing node for execution, the second database computing node may obtain the state information of the target transaction from the database state node. In this way, based on the corresponding state information, when an operation that is being performed in the target transaction before the target transaction is suspended is a write operation, the write operation does not need to be rolled back or redone after node switchover is completed, but resumable processing may be implemented at a transaction granularity or even a statement granularity. When an operation that is being performed in the target transaction before the target transaction is suspended is a read operation, after node switchover is completed, the second database computing node may continue to perform the read operation or re-execute an SQL statement corresponding to the read operation. In this way, additional time overheads caused by the node switchover can be reduced to a great extent, and user experience can be improved.

The first database computing node, the second database computing node, the database state node, and the database storage node may all be implemented by using software, or may be implemented by using hardware. For example, the following describes an implementation of the first database computing node. Similarly, for an implementation of another node, refer to the implementation of the first database computing node.

In an example in which the node is used as a software function unit, the first database computing node may include code running on a computing instance. The computing instance may be at least one of computing devices such as a physical host (computing device), a virtual machine, and a container. Further, there may be one or more computing devices. For example, the first database computing node may include code running on a plurality of hosts/virtual machines/containers. It should be noted that the plurality of hosts/virtual machines/containers configured to run the application program may be distributed in a same region or may be distributed in different regions. The plurality of hosts/virtual machines/containers configured to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same VPC, or may be distributed on a plurality of VPCs. Generally, one VPC is set in one region. A communication gateway needs to be set in each VPC for communication between two VPCs in a same region and cross-region communication between VPCs in different regions. Interconnection between VPCs is implemented through the communication gateway.

In an example in which the node is used as a hardware function unit, the first database computing node may include at least one computing device, such as a server. Alternatively, the first database computing node may be a device implemented by using an ASIC, or a PLD, or the like. The PLD may be implemented by a CPLD, an FPGA, GAL, or any combination thereof.

A plurality of computing devices included in the first database computing node may be distributed in a same region, or may be distributed in different regions. The plurality of computing devices included in the first database computing node may be distributed in a same AZ, or may be distributed in different AZs. Similarly, the plurality of computing devices included in the first database computing node may be distributed in a same VPC, or may be distributed in a plurality of VPCs. The plurality of computing devices may be any combination of computing devices such as a server, an ASIC, a PLD, a CPLD, an FPGA, and a GAL.

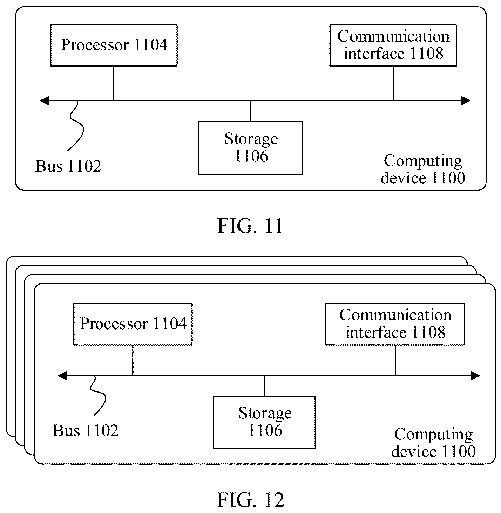

An embodiment of this application further provides a computing device 1100. Refer to FIG. 11. The computing device 1100 includes a bus 1102, a processor 1104, a storage 1106, and a communication interface 1108. The processor 1104, the storage 1106, and the communication interface 1108 communicate with each other through the bus 1102. The computing device 1100 may be a server or a terminal device. It should be understood that quantities of processors and storages in the computing device 1100 are not limited in this application.

The bus 1102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus 1102 is indicated by using only one line in FIG. 11. However, it does not indicate that there is only one bus or only one type of bus. The bus 1102 may include a path for transferring information between components (for example, the storage 1106, the processor 1104, and the communication interface 1108) of the computing device 1100.

The processor 1104 may include any one or more of processors such as a central processing unit (central processing unit, CPU), a graphics processing unit (graphics processing unit, GPU), a microprocessor (microprocessor, MP), or a digital signal processor (digital signal processor, DSP).

The storage 1106 may include a volatile memory (volatile memory), for example, a random access memory (random access memory, RAM). The processor 1104 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 1106 stores executable program code, and the processor 1104 executes the executable program code to separately implement functions of the first database computing node, the second database computing node, the database state node, and the database storage node, so as to implement the foregoing transaction processing method. In other words, the storage 1106 stores instructions for performing the foregoing transaction processing method.

Alternatively, the storage 1106 stores executable code, and the processor 1104 executes the executable code to implement a function of any one of the foregoing nodes, so as to implement the foregoing transaction processing method. In other words, the storage 1106 stores instructions for performing the foregoing transaction processing method.

The communication interface 1108 uses a transceiver module, for example, but not limited to, a network interface card or a transceiver, to implement communication between the computing device 1100 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 12, the computing device cluster includes at least one computing device 1100. A storage 1106 in one or more computing devices 1100 in the computing device cluster may store same instructions for performing the foregoing transaction processing method.

Alternatively, in some possible implementations, the storage 1106 in the one or more computing devices 1100 in the computing device cluster may separately store some instructions for performing the foregoing transaction processing method. In other words, a combination of the one or more computing devices 1100 may jointly execute the instructions for performing the foregoing transaction processing method.

It should be noted that storages 1106 in different computing devices 1100 in the computing device cluster may store different instructions, and different instructions are separately used for performing a part of functions of any one of the foregoing nodes. That is, the instructions stored in the storages 1106 in different computing devices 1100 may implement functions of one or more nodes of the first database computing node, the second database computing node, the database state node, and the database storage node.

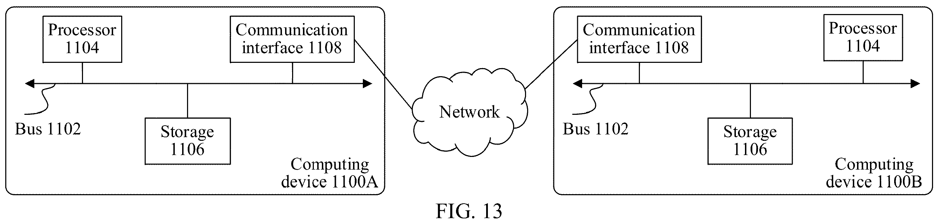

In some possible implementations, the one or more computing devices in the computing device cluster may be connected through a network. The network may be a wide area network, a local area network, or the like. FIG. 13 shows a possible implementation. As shown in FIG. 13, two computing devices 1100A and 1100B are connected through a network. Specifically, each computing device is connected to the network through a communication interface in the computing device. In this type of possible implementation, a storage 1106 in the computing device 1100A stores instructions for performing functions of the first database computing node and the second database computing node. In addition, a storage 1106 in the computing device 1100B stores instructions for performing functions of the database state node and the database storage node. Alternatively, the storage 1106 in the computing device 1100A stores instructions for performing functions of the database state node and the database storage node. In addition, the storage 1106 in the computing device 1100B stores instructions for performing a function of the first database computing node.

A connection mode between the computing device clusters shown in FIG. 13 may be that, considering that the transaction processing method provided in this application needs to store a large amount of data, perform computing, and the like, the functions implemented by the first database computing node and the second database computing node are performed by the computing device 1100B, or the functions implemented by the database state node and the database storage node are performed by the computing device 1100B.

It should be understood that functions of the computing device 1100A shown in FIG. 13 may alternatively be completed by a plurality of computing devices 1100. Similarly, functions of the computing device 100B may alternatively be completed by a plurality of computing devices 1100.

An embodiment of this application further provides another computing device cluster. For a connection relationship between computing devices in the computing device cluster, refer to the connection mode of the computing device cluster shown in FIG. 13. A difference lies in that a storage 1106 in one or more computing devices 1100 in the computing device cluster may store same instructions for performing the foregoing transaction processing method.

Alternatively, in some possible implementations, the storage 1106 in the one or more computing devices 1100 in the computing device cluster may separately store some instructions for performing the foregoing transaction processing method. In other words, a combination of the one or more computing devices 1100 may jointly execute the instructions for performing the foregoing transaction processing method.

It should be noted that storages 1106 in different computing devices 1100 in the computing device cluster may store different instructions, to perform a part of functions of the cloud-native database system provided in embodiments of this application. That is, the instructions stored in the storages 1106 in different computing devices 1100 may implement functions of one or more nodes of the first database computing node, the second database computing node, the database state node, and the database storage node.

An embodiment of this application further provides a computer program product including instructions. The computer program product may be software or a program product that includes the instructions and that can run on a computing device or can be stored in any usable medium. When the instructions are run by a computing device cluster, the computing device cluster is caused to perform the foregoing transaction processing method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes computer program instructions. When the computer program instructions are executed by a computing device cluster, the computing device cluster performs the foregoing transaction processing method.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like. It should be noted that the computer-readable storage medium mentioned in embodiments of this application may be a non-volatile storage medium, that is, may be a non-transitory storage medium.

It should be understood that "a plurality of" mentioned in this specification means two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, improvement, or the like made without departing from the spirit and principle of this application should fall within the protection scope of this application.

**Claims**

1. A transaction processing method, applied to a cloud-native database system, wherein the cloud-native database system comprises a first database computing node, a second database computing node, a database state node, and a database storage node, the first database computing node and the second database computing node are configured to process a transaction requested by a user, the database state node is configured to store state information of the transaction, and the database storage node is configured to store data of a database; and the method comprises:

   responding, by the first database computing node, to a transaction request of the user and starting to process a target transaction, wherein the target transaction is used for performing a read operation and/or a write operation on the data in the database storage node;
   storing, by the first database computing node, state information of the target transaction into the database state node in a process of processing the target transaction;
   in the process in which the first database computing node processes the target transaction, suspending, by the first database computing node, processing the target transaction; and
   obtaining, by the second database computing node, the state information of the target transaction from the database state node, and continuing to process the target transaction based on the state information of the target transaction.

2. The method according to claim 1, wherein the target transaction comprises at least one structured query language SQL statement, and the state information of the target transaction is used for recording an execution state of an SQL statement that is being executed in the target transaction before the target transaction is suspended; and continuing, by the second database computing node, to process the target transaction based on the state information of the target transaction comprises:
   continuing, by the second database computing node based on the execution state of the SQL statement that is being executed in the target transaction before the target transaction is suspended, to execute the SQL statement that is being executed in the target transaction.

3. The method according to claim 1 or 2, wherein

   storing, by the first database computing node, the state information of the target transaction into the database state node in the process of processing the target transaction comprises: storing, by the first database computing node, a log of the target transaction into the database state node; and
   continuing, by the second database computing node, to process the target transaction based on the state information of the target transaction comprises: continuing, by the second database computing node based on the log of the target transaction in the database state node, to perform the write operation that is being performed in the target transaction before the target transaction is suspended.

4. The method according to claim 3, wherein

   storing, by the first database computing node, the state information of the target transaction into the database state node in the process of processing the target transaction further comprises: storing, by the first database computing node into the state node, a table locked state of the write operation that is being performed in the target transaction before the target transaction is suspended; and
   continuing, by the second database computing node, to process the target transaction based on the state information of the target transaction comprises: continuing, by the second database computing node based on the log of the target transaction in the database state node and the table locked state of the write operation that is being performed in the target transaction before the target transaction is suspended, to perform the write operation that is being performed in the target transaction before the target transaction is suspended.

5. The method according to claim 1 or 2, wherein

storing, by the first database computing node, the state information of the target transaction into the database state node in the process of processing the target transaction comprises: storing, by the first database computing node into the database state node, a query execution plan tree and an intermediate result of the SQL statement that corresponds to the read operation and that is being executed in the target transaction before the target transaction is suspended; and

continuing, by the second database computing node, to process the target transaction based on the state information of the target transaction comprises: continuing, by the second database computing node based on the query execution plan tree and the intermediate result, in the database state node, of the SQL statement that corresponds to the read operation and that is being executed in the target transaction before the target transaction is suspended, to perform the read operation that is being performed in the target transaction before the target transaction is suspended.

6. The method according to claim 1, wherein

storing, by the first database computing node, the state information of the target transaction into the database state node in the process of processing the target transaction comprises: storing, by the first database computing node into the database state node in the process of processing the target transaction, an SQL statement that corresponds to the read operation and that is currently being executed in the target transaction; and

continuing, by the second database computing node, to process the target transaction based on the state information of the target transaction comprises: re-executing, by the second database computing node, the SQL statement that corresponds to the read operation and that is being executed in the target transaction before the target transaction is suspended.

7. The method according to claim 6, wherein

storing, by the first database computing node, the state information of the target transaction into the database state node in the process of processing the target transaction further comprises: storing, by the first database computing node into the database state node in the process of processing the target transaction, an execution result of the SQL statement that corresponds to the read operation and that has been executed in the target transaction; and

continuing, by the second database computing node, to process the target transaction based on the state information of the target transaction further comprises: after re-executing the SQL statement that corresponds to the read operation and that is currently being executed in the target transaction, continuing, by the second database computing node, to process the target transaction based on the execution result, in the database state node, of the SQL statement that corresponds to the read operation and that has been executed in the target transaction.

8. The method according to any one of claims 1 to 7, wherein a persistent memory is used for the database state node to store the state information of the transaction.

9. The method according to any one of claims 1 to 8, wherein the method further comprises:

pushing down, by the first database computing node to the database storage node for execution, a target operator of the SQL statement that is being executed in the target transaction before the target transaction is suspended, wherein the target operator is a part of operators comprised in the query execution plan tree of the SQL statement that is being executed;

storing, by the database storage node, an execution result of the target operator; and

after the first database computing node suspends processing the target transaction, obtaining, by the second database computing node, the state information of the target transaction from the database state node, and continuing to process the target transaction based on the state information of the target transaction comprises:

after the first database computing node suspends processing the target transaction, obtaining, by the second database computing node, the state information of the target transaction from the database state node, and obtaining the execution result of the target operator from the database storage node; and

continuing, by the second database computing node based on the state information of the target transaction and the execution result of the target operator, to execute the SQL statement that is being executed in the target transaction before the target transaction is suspended.

10. The method according to any one of claims 1 to 9, wherein the state information of the target transaction further comprises a session state of the target transaction.

11. The method according to any one of claims 1 to 10, wherein the method comprises:

   storing, by the first database computing node, the state information of the target transaction into the database state node based on a remote direct memory access RDMA technology or a compute express link CXL technology; and/or
   obtaining, by the second database computing node, the state information of the target transaction from the database state node based on the RDMA technology or the CXL technology.

12. The method according to claim 1, wherein the first database computing node suspends processing the target transaction when cross-node scale-out or cross-node scale-in needs to be performed, or a fault occurs.

13. A cloud-native database system, wherein the cloud-native database system comprises a first database computing node, a second database computing node, a database state node, and a database storage node, the first database computing node and the second database computing node are configured to process a transaction requested by a user, the database state node is configured to store state information of the transaction, and the database storage node is configured to store data of a database;

   the first database computing node is specifically configured to respond to a transaction request of the user and start to process a target transaction, wherein the target transaction is used for performing a read operation and/or a write operation on the data in the database storage node;
   the first database computing node is further specifically configured to store state information of the target transaction into the database state node in a process of processing the target transaction;
   in the process in which the first database computing node processes the target transaction, the first database computing node is further specifically configured to suspend processing the target transaction; and
   the second database computing node is specifically configured to: obtain the state information of the target transaction from the database state node, and continue to process the target transaction based on the state information of the target transaction.

14. The system according to claim 13, wherein the target transaction comprises at least one structured query language SQL statement, and the state information of the target transaction is used for recording an execution state of an SQL statement that is being executed in the target transaction before the target transaction is suspended; and
   the second database computing node is specifically configured to continue, based on the execution state of the SQL statement that is being executed in the target transaction before the target transaction is suspended, to execute the SQL statement that is being executed in the target transaction.

15. The system according to claim 13 or 14, wherein

   the first database computing node is specifically configured to store a log of the target transaction into the database state node; and
   the second database computing node is specifically configured to continue, based on the log of the target transaction in the database state node, to perform the write operation that is being performed in the target transaction before the target transaction is suspended.

16. The system according to claim 15, wherein

   the first database computing node is further specifically configured to store, into the state node, a table locked state of the write operation that is being performed in the target transaction before the target transaction is suspended; and
   the second database computing node is further specifically configured to continue, based on the log of the target transaction in the database state node and the table locked state of the write operation that is being performed in the target transaction before the target transaction is suspended, to perform the write operation that is being performed in the target transaction before the target transaction is suspended.

**17.** The system according to claim 13 or 14, wherein

the first database computing node is specifically configured to store, into the database state node, a query execution plan tree and an intermediate result of the SQL statement that corresponds to the read operation and that is being executed in the target transaction before the target transaction is suspended; and
the second database computing node is specifically configured to continue, based on the query execution plan tree and the intermediate result, in the database state node, of the SQL statement that corresponds to the read operation and that is being executed in the target transaction before the target transaction is suspended, to perform the read operation that is being performed in the target transaction before the target transaction is suspended.

**18.** The system according to claim 13, wherein

the first database computing node is specifically configured to: in the process of processing the target transaction, store, into the database state node, an SQL statement that corresponds to the read operation and that is currently being executed in the target transaction; and
the second database computing node is specifically configured to re-execute the SQL statement that corresponds to the read operation and that is being executed in the target transaction before the target transaction is suspended.

**19.** The system according to claim 18, wherein

the first database computing node is further specifically configured to: in the process of processing the target transaction, store, into the database state node, an execution result of the SQL statement that corresponds to the read operation and that has been executed in the target transaction; and
the second database computing node is further specifically configured to: after re-executing the SQL statement that corresponds to the read operation and that is currently being executed in the target transaction, continue to process the target transaction based on the execution result, in the database state node, of the SQL statement that corresponds to the read operation and that has been executed in the target transaction.

**20.** The system according to any one of claims 13 to 19, wherein a persistent memory is used for the database state node to store the state information of the transaction.

**21.** The system according to any one of claims 13 to 20, wherein

the first database computing node is further specifically configured to push down, to the database storage node for execution, a target operator of the SQL statement that is being executed in the target transaction before the target transaction is suspended, wherein the target operator is a part of operators comprised in the query execution plan tree of the SQL statement that is being executed;
the database storage node is further specifically configured to store an execution result of the target operator; after the first database computing node suspends processing the target transaction, the second database computing node is further specifically configured to: obtain the state information of the target transaction from the database state node, and obtain the execution result of the target operator from the database storage node; and
the second database computing node is further specifically configured to continue, based on the state information of the target transaction and the execution result of the target operator, to execute the SQL statement that is being executed in the target transaction before the target transaction is suspended.

**22.** The system according to any one of claims 13 to 21, wherein the state information of the target transaction further comprises a session state of the target transaction.

**23.** The system according to any one of claims 13 to 22, wherein

the first database computing node is specifically configured to store the state information of the target transaction into the database state node based on a remote direct memory access RDMA technology or a compute express link CXL technology; and/or
the second database computing node is specifically configured to obtain the state information of the target transaction from the database state node based on the RDMA technology or the CXL technology.

24. The system according to claim 13, wherein the first database computing node is specifically configured to suspend processing the target transaction when cross-node scale-out or cross-node scale-in needs to be performed, or a fault occurs.

25. A computing device cluster, comprising at least one computing device, wherein each computing device comprises a processor and a storage; and
the processor of the at least one computing device is configured to execute instructions stored in the storage of the at least one computing device, to cause the computing device cluster to perform the method according to any one of claims 1 to 12.

26. A computer-readable storage medium, comprising computer program instructions, wherein when the computer program instructions are executed by a computing device cluster, the computing device cluster performs the method according to any one of claims 1 to 12.

27. A computer program product comprising instructions, wherein when the instructions are run by a computing device cluster, the computing device cluster is caused to perform the method according to any one of claims 1 to 12.

```
┌─────────────────┐   ┌─────────────────┐   ┌─────────────────┐
│    Database     │───│    Database     │───│    Database     │
│ computing node  │   │ computing node  │   │ computing node  │
└────────┬────────┘   └────────┬────────┘   └────────┬────────┘
         │                     │                     │
┌────────┴────────┐   ┌────────┴────────┐   ┌────────┴────────┐
│ Database storage│   │ Database storage│   │ Database storage│
│      node       │   │      node       │   │      node       │
└─────────────────┘   └─────────────────┘   └─────────────────┘
```

FIG. 1

```
┌─────────────────────────────────────────────────────────────┐
│  ┌──────────────┐   ┌──────────────┐   ┌──────────────┐      │
│  │   Database   │   │   Database   │   │   Database   │      │
│  │computing node│   │computing node│   │computing node│      │
│  └──────────────┘   └──────────────┘   └──────────────┘      │
└─────────────────────────────┬───────────────────────────────┘
                              │
┌─────────────────────────────────────────────────────────────┐
│                        Storage layer                         │
└─────────────────────────────────────────────────────────────┘
```

FIG. 2

```
┌─────────────────┐   ┌─────────────────┐   ┌─────────────────────┐
│     Client      │───│ Scheduling node │───│ Cloud-native database│
│      301        │   │      302        │   │     system 303      │
└─────────────────┘   └─────────────────┘   └─────────────────────┘
```

FIG. 3

```
┌───────────────────────────────────────────────────────────────┐
│              Cloud-native database system 301                  │
│   ┌──────────────────┐        ┌──────────────────┐             │
│   │  First database  │        │ Second database  │             │
│   │computing node 3031│        │computing node 3032│            │
│   └────────┬─────────┘        └────────┬─────────┘             │
│  ┌─│                │                  │              │─┐       │
│  │ │   ┌────────────┴──────────────────┴────────────┐ │ │      │
│  │ │   │           Database state node              │ │ │      │
│  │ │   │                3033                        │ │ │      │
│  │     └─────────────────────┬──────────────────────┘   │      │
│  │     ┌─────────────────────┴──────────────────────┐   │      │
│  └─────│          Database storage node             │───┘      │
│        │                3034                        │          │
│        └────────────────────────────────────────────┘          │
└───────────────────────────────────────────────────────────────┘
```

FIG. 4

A first database computing node responds to a transaction request of a user and starts to process a target transaction, where the target transaction is used for performing a read operation and/or a write operation on data in a database storage node — 501

The first database computing node stores state information of the target transaction into a database state node in a process of processing the target transaction — 502

In the process in which the first database computing node processes the target transaction, the first database computing node suspends processing the target transaction — 503

A second database computing node obtains the state information of the target transaction from the database state node, and continues to process the target transaction based on the state information of the target transaction — 504

FIG. 5

First database computing node

Second database computing node

$\triangle$ + $\bigcirc$

$\triangle$ + $\bigcirc$

Database state node

FIG. 6

Second database computing node

Table R in a buffer pool

√        ×

Target transaction

Another transaction

First database computing node

Table locked state of the table R

Table locked state of the table R

Table locked state of the table R

Table locked state of the table R

Database state node

FIG. 7

Data page

R.B>10        S.D>20

Select operator        Select operator

R.A=S.C

Hash join operator ——— 81

△ ——— 82

Group-by operator ——— 83

FIG. 8

First database computing node

Second database computing node

Database state node

Query
plan
tree

Intermediate
result

Active transaction list

FIG. 9

First database computing node

Query plan tree
corresponding to
the statement 1

Second database computing node

Re-
execute

Statement 1

Database state node

Statement 1

Active transaction list

FIG. 10

Processor 1104

Communication interface 1108

Storage 1106

Bus 1102

Computing device 1100

FIG. 11

Processor 1104

Communication interface 1108

Storage 1106

Bus 1102

Computing device 1100

FIG. 12

FIG. 13

## INTERNATIONAL SEARCH REPORT

| International application No. |
|---|
| **PCT/CN2024/094267** |

**A. CLASSIFICATION OF SUBJECT MATTER**

G06F16/21(2019.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 云, 数据库, 节点, 存储, 保存, 中断, 暂停, 状态, cloud, database, nodes, storage, halt, interrupt, status

**C. DOCUMENTS CONSIDERED TO BE RELEVANT**

| Category* | Citation of document, with indication, where appropriate, of the relevant passages | Relevant to claim No. |
|---|---|---|
| X | CN 113934707 A (JINGDONG SHUKE HAIYI INFORMATION TECHNOLOGY CO., LTD.) 14 January 2022 (2022-01-14) description, paragraphs [0002]-[0034] | 1-3, 5-8, 10-15, 17-20, 22-27 |
| A | CN 112487093 A (INSPUR CLOUD INFORMATION TECHNOLOGY CO., LTD.) 12 March 2021 (2021-03-12) entire document | 1-27 |
| A | CN 113254425 A (ALIBABA CLOUD COMPUTING LTD.) 13 August 2021 (2021-08-13) entire document | 1-7 |
| A | US 2018349430 A1 (SAP SE) 06 December 2018 (2018-12-06) entire document | 1-27 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 July 2024** | **05 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/094267**

| Patent document cited in search report | | | Publication date (day/month/year) | Patent family member(s) | | | Publication date (day/month/year) |
|---|---|---|---|---|---|---|---|
| CN | 113934707 | A | 14 January 2022 | None | | | |
| CN | 112487093 | A | 12 March 2021 | None | | | |
| CN | 113254425 | A | 13 August 2021 | None | | | |
| US | 2018349430 | A1 | 06 December 2018 | US | 2021209092 | A1 | 08 July 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310693898

- CN 202410543821